(19) Europäisches Patentamt
European Patent Office
Office européen des brevets

(11) EP 4 116 359 B1

(12) **EUROPEAN PATENT SPECIFICATION**

(45) Date of publication and mention of the grant of the patent:
**13.03.2024 Bulletin 2024/11**

(21) Application number: **21184142.4**

(22) Date of filing: **07.07.2021**

(51) International Patent Classification (IPC):
***C08J 5/18*** *(2006.01)* ***C08F 210/16*** *(2006.01)*
***C08F 4/659*** *(2006.01)* ***C08L 23/08*** *(2006.01)*

(52) Cooperative Patent Classification (CPC):
(C-Sets available)
**C08J 5/18; C08F 210/16; C08L 23/0815;**
C08F 4/65912; C08F 4/65916; C08F 2420/07;
C08J 2323/08; C08J 2423/08; C08L 2207/066

(Cont.)

# (54) MONOLAYER BLOWN FILM

EINSCHICHTIGE BLASFOLIE

FILM SOUFFLÉ MONOCOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.01.2023 Bulletin 2023/02**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **AHO, Jani**
  **06101 Porvoo (FI)**

(74) Representative: **TBK**
**Bavariaring 4-6**
**80336 München (DE)**

(56) References cited:
**EP-A1- 1 375 584**
**EP-A1- 1 941 998**
**EP-A1- 1 941 999**
**EP-A1- 2 415 598**
**EP-A1- 2 875 948**
**EP-A1- 3 101 060**
**WO-A1-2006/045550**

EP 4 116 359 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815;**
C08F 210/16, C08F 210/14, C08F 210/08,
C08F 2500/12, C08F 2500/27

## Description

The present invention relates to monolayer blown films comprising a specific blend of Ziegler-Natta catalysed linear low density polyethylene (znLLDPE) and a specific multimodal metallocene catalysed LLDPE, with well-balanced mechanical properties, especially dart drop (impact strength) and tensile modulus.

High standards are nowadays required for packaging materials. Quite often properties are required in the packaging industry, which are conflicting. Typically, high stiffness and toughness are required in parallel. To achieve these different properties seldom pure components, but rather combinations of different polymer components are used. Two different approaches mainly are at the skilled person's disposal: (a) blends of two or more polymers to form a heterophasic structure, or (b) producing a multilayer structure with different materials providing different functions. Both of them are applied in industry.

Due to the different requirements nowadays multilayer packaging with different type of materials are used, which from one side serve the needs, but from the other side such structures make recycling difficult. Therefore using pure materials is preferred, i.e. a packaging with 'mono-materials' is really appreciated. However, this imposes higher requirement to the performance of materials themselves, a material with balanced performance is therefore highly appreciated.

One way to improve the performances of one material is, e.g. to blend two polyethylenes, e.g. mLLDPE with znLLDPE, which is in principle well known. However, there is still room for further improvement. Higher stiffness/impact strength is still required.

As stated above the recycling of packaging material after their first use is an important topic nowadays. It is much more challenging to recycle packaging films made of different materials, e.g. different plastics, than to recycle mono-material solutions. On the other hand, the use of different materials is sometimes necessary to obtain acceptable properties, like mechanical properties. Therefore, another objective of the present invention is the provision of a polyethylene based mono-material solution, which shows well-balanced mechanical properties, especially dart drop (impact strength) and tensile modulus.

EP3101060 discloses monolayer blown films used in packaging applications and comprising a blend comprising a multimodal linear low density polyethylene and a tubular or autoclave low density polyethylene.

The present inventors have found that a monolayer polyethylene blown film comprising certain carefully selected components, provides films with well-balanced mechanical properties, especially dart drop (impact strength) and tensile modulus.

## Summary of Invention

The present invention is therefore directed to a monolayer polyethylene blown film comprising

a) 50.0 wt% to 95.0 wt%, based on the total weight of the monolayer polyethylene blown film, of a multimodal Ziegler-Natta catalysed linear low density polyethylene (znLLDPE) having a density in the range of from 925 to 950 kg/m$^3$ (ISO 1183) and an $MFR_5$ (190°C, 5 kg, ISO 1133) in the range of from 0.1 to 6.0 g/10 min; and

b) 5.0 wt% to 50.0 wt%, based on the total weight of the monolayer polyethylene blown film, of a multimodal metallocene catalysed linear low density polyethylene (mLLDPE) having a density in the range of from 880 to 925 kg/m$^3$ (ISO 1183), an $MFR_2$ (190°C, 2.16 kg, ISO 1133) in the range of from 0.1 to 6.0 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50;

the total amounts of a) + b) summing up to 100 wt%.

In an embodiment the first multimodal metallocene catalysed linear low density polyethylene (mLLDPE) consists of an ethylene polymer component (A), which consists of an ethylene polymer fraction (A-1) and an ethylene polymer fraction (A-2), and an ethylene polymer component (B).

## Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this

includes a plural of that noun unless something else is specifically stated.

Metallocene catalysed linear low density polyethylene (mLLDPE) is defined in this invention as linear low density polyethylene copolymer, which has been produced in the presence of a metallocene catalyst.

Ziegler-Natta catalysed linear low density polyethylene (znLLDPE) is defined in this invention as linear low density polyethylene copolymer, which has been produced in the presence of a Ziegler-Natta catalyst.

Term "multimodal" in context of multimodal linear low density polyethylene means herein multimodality with respect to melt flow rate (MFR). The multimodal linear low density polyethylene can have further multimodality with respect to one or more further properties, like density, comonomer type and/or comonomer content, as will be described later below.

## Detailed description of Invention

The film of the invention is a monolayer polyethylene blown film comprising a blend of a multimodal Ziegler-Natta catalysed linear low density polyethylene (znLLDPE) and a multimodal metallocene catalysed linear low density polyethylene (mLLDPE)

The monolayer is composed of polyethylene polymers only, i.e. no other polymer than an ethylene based polymer is present.

The monolayer polyethylene blown film according to the invention comprises

a) 50.0 wt% to 95.0 wt%, based on the total weight of the monolayer polyethylene blown film, of a multimodal Ziegler-Natta catalysed linear low density polyethylene (znLLDPE) having a density in the range of from 925 to 950 kg/$m^3$ (ISO 1183) and an $MFR_5$ (190°C, 5 kg, ISO 1133) in the range of from 0.1 to 6.0 g/10 min; and

b) 5.0 wt% to 50.0 wt%, based on the total weight of the monolayer polyethylene blown film, of a multimodal metallocene catalysed linear low density polyethylene (mLLDPE) having a density in the range of from 880 to 925 kg/$m^3$ (ISO 1183), an $MFR_2$ (190°C, 2.16 kg, ISO 1133) in the range of from 0.1 to 6.0 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50;

the total amounts of a) + b) summing up to 100 wt%.

Preferably, the monolayer consists of the znLLDPE and the mLLDPE.

Preferably, the znLLDPE is present in an amount of 52.0 to 93.0 wt%, more preferably of 55.0 to 90.0 wt%, based on the total weight of the monolayer.

Thus, the mLLDPE is preferably present in an amount of 7.0 to 48.0 wt% and more preferably of 10.0 to 45.0 wt%, based on the total weight of the monolayer.

*Ad multimodal Ziegler-Natta catalysed linear low density polyethylene (znLLDPE)*

The multimodal Ziegler-Natta catalysed linear low density polyethylene (znLLDPE) has a density (ISO 1183) in the range of from 925 to 950 kg/$m^3$, preferably from 927 to 948 kg/$m^3$, more preferably from 928 to 945 kg/$m^3$, and even more preferably from 930 to 943 kg/$m^3$.

The $MFR_5$ (190°C, 5 kg, ISO 1133) of the znLLDPE is in the range of from 0.1 to 6.0 g/10 min, preferably from 0.3 to 5.0 g/10 min, more preferably from 0.5 to 3.0 g/10 min, and even more preferably from 0.7 to 2.5 g/10 min.

The znLLDPE contains at least one or two comonomer(s). Suitable comonomers are $C_3$-$C_{10}$ alpha-olefin comonomers.

Thus, the znLLDPE can be a copolymer of ethylene and one $C_3$-$C_{10}$ alpha-olefin comonomer or a terpolymer of ethylene and two different $C_3$-$C_{10}$ alpha-olefin comonomers.

Preferably, the comonomers are selected from the group of 1-butene, 1-hexene and 1-octene. It is preferred if the comonomer employed is 1-butene and/or 1-hexene.

More preferred are terpolymers comprising 1-butene and 1-hexene comonomers.

The total comonomer content of the znLLDPE is preferably in the range of from 0.3 to 7.0 mol%, more preferably of from 0.6 to 4.5 mol% and even more preferably of from 1.5 to 3.5 mol%.

1-butene is preferably present in an amount of from 0.1 to 3.0 mol%, more preferably of from 0.2 to 2.0 mol%, and even more preferably of from 0.3 to 1.5 mol% and 1-hexene is present in an amount of from 0.2 to 4.0 mol%, more preferably of from 0.4 to 2.5 mol% and even more preferably of from 0.7 to 2.0 mol%.

In one embodiment of the monolayer film according to the invention, the znLLDPE comprises

(A) a lower molecular weight (LMW) homopolymer of ethylene and
(B) a higher molecular weight (HMW) terpolymer of ethylene, 1-butene and 1-hexene.

The LMW homopolymer fraction (A) has a lower molecular weight than the HMW terpolymer fraction (B).

In a further embodiment of the present invention the lower molecular weight (LMW) homopolymer of ethylene (A) consists of one or two fractions, i.e. of one ore two homopolymers of ethylene.

In case that the lower molecular weight (LMW) homopolymer of ethylene (A) consists of two homopolymers of ethylene, these two fractions are named (A-1) and (A-2)

The lower molecular weight homopolymer (A) of the znLLDPE has a melt index $MFR_2$ according to ISO 1133 (190°C) in the range of from 200 to 1000 g/10min, preferably of from 250 to 800 g/10min; a density according to ISO 1183 in the range of from 940 to 980 $kg/m^3$, preferably 945 to 975 $kg/m^3$ and a comonomer content in the range of from 0 to 2.5 mol%, preferably from 0 to 2.0 mol%.

The amount of the lower molecular weight fraction (A) of the znLLDPE is in the range of 30 to 60 wt%, preferably 35 to 50 wt% and more preferably 35 to 45 wt%.

The expression "homopolymer of ethylene" used herein refers to a polyethylene that consists substantially, i.e. to at least 98.0 wt%, preferably at least 99.0 wt% and more preferably at least 99.5 wt% by weight, like at least 99.8 wt% of ethylene.

In case that the lower molecular weight (LMW) homopolymer of ethylene (A) consists of two homopolymers of ethylene, i.e. fractions (A-1) and (A-2), these two fractions preferably have a different $MFR_2$ according to ISO 1133 (190°C).

The homopolymer fraction (A-1) preferably has a $MFR_2$ according to ISO 1133 (190°C) in the range of 100 to 400 g/10 min, more preferably in the range of 150 to 300 g/10 min, whereas the homopolymer fraction (A-2) preferably has a $MFR_2$ according to ISO 1133 (190°C) in the range of 450 to 1200 g/10 min, more preferably in the range of 600 to 1100 g/10 min.

The $MFR_2$ of fraction (A-1) is preferably lower than the $MFR_2$ of the total lower molecular weight (LMW) homopolymer of ethylene (A).

According to a preferred embodiment the ratio of $MFR_2$(A-1)/$MFR_2$ (A) may be for example between greater than 1 and up to 10, preferably between 1.5 and 5, such as 1.5 to 4. Ideally, the MFR difference between the first and second homopolymer fraction (A-1) and (A-2) is as high as possible.

Ideally, the MFR difference between the first homopolymer fraction (A-1) and the $MFR_2$ of the total lower molecular weight (LMW) homopolymer of ethylene (A) is as high as possible e.g. $MFR_2$ of first homopolymer fraction (A-1) may be at least 50 g/10min, such as at least 100 g/10min such as 100 to 200 g/10min lower than the $MFR_2$ of the total lower molecular weight (LMW) homopolymer of ethylene (A).

The density of the two homopolymer fractions (A-1) and (A-2) may be the same or may be different and is in the range of 955 to 980 $kg/m^3$, preferably 965 to 980 $kg/m^3$ or 965 to 975 $kg/m^3$.

In an embodiment of the present invention the density of homopolymer fractions (A-1) and (A-2) are the same or differ +/- 5 $kg/m^3$, preferably +/- 2 $kg/m^3$.

The total lower molecular weight (LMW) homopolymer of ethylene (A) may comprise 30 to 60 wt% of the first ethylene homopolymer fraction (A-1) and 70 to 40 wt% of the second ethylene homopolymer fraction (A-2). In some embodiments, there is an excess of the second ethylene homopolymer fraction (A-2), e.g. 54 to 70 wt% of the second ethylene homopolymer fraction (A-2).

In another embodiment the total lower molecular weight (LMW) homopolymer of ethylene (A) contains the same amount of first and second ethylene homopolymer fractions (A-1) and (A-2).

The higher molecular weight fraction (B) has a lower $MFR_2$ and a lower density than the lower molecular weight fraction (A).

Preferably, the znLLDPE is produced in a multi-stage, e.g. two-stage or three-stage polymerization using the same Ziegler-Natta catalyst in all stages. Preferably, the znLLDPE is made using a slurry polymerization in at least one loop reactor followed by a gas phase polymerization in a gas phase reactor.

A loop reactor - gas phase reactor system or loop - loop - gas phase reactor system is well known as Borealis technology, i.e. a BORSTAR® reactor system.

In one embodiment, the znLLDPE is thus preferably formed in a two-stage process comprising a first slurry loop polymerization followed by gas phase polymerization in the presence of a Ziegler-Natta catalyst.

Preferably, the lower molecular weight fraction (A) is produced in a continuously operating loop reactor where ethylene is polymerized in the presence of a Ziegler-Natta catalyst and the higher molecular weight fraction (B) is then formed in a gas phase reactor using the same Ziegler-Natta catalyst.

Such znLLDPEs are known in the state of the art and are described e.g. in WO 03/066698 or WO 2008/034630 or are commercially available, such as BorShape™ FX1001 and BorShape™ FX1002 (both from Borealis AG).

In another embodiment the znLLDPE is preferably formed in a three-stage process preferably comprising a first slurry reactor (loop reactor 1), whereby the first slurry loop reactor is connected in series with another slurry reactor (loop reactor 2), so that the first homopolymer fraction (A-1) produced in the loop reactor 1 is fed to the loop reactor 2, wherein the second homopolymer fraction (A-2) is produced in the presence of the first fraction (A-1). The loop reactor

2 is thereby connected in series to a gas phase reactor (GPR), so that the total molecular weight fraction (A) leaving the second slurry reactor is fed to the GPR to produce the znLLDPE. In this case, the reaction conditions in the two slurry reactors are chosen in a way that in the two slurry reactors different products in view of MFR and/or density are produced.

Such a process is described inter alia in WO 2016/198273.

A suitable process is the Borstar PE 3G process.

Additionally the znLLDPE, preferably the znLLDPE terpolymer may also contain one or more additives selected from antioxidants, process stabilizers, slip agents, pigments, UV-stabilizers and other additives known in the art.

*Ad multimodal metallocene catalysed linear low density polyethylene (mLLDPE)*

The multimodal metallocene catalysed linear low density polyethylene (mLLDPE) has a density (ISO 1183) in the range of from 880 to 925 kg/$m^3$, preferably in the range of from 890 to 922 kg/$m^3$ and more preferably in the range of from 900 to 918 kg/$m^3$.

The $MFR_2$ (190°C, 2.16 kg, ISO 1133) of the first multimodal metallocene catalysed linear low density polyethylene (mLLDPE-1) is in the range of from 0.1 to 6.0 g/10 min, preferably from 0.3 to 4.0 g/10 min, more preferably from 0.5 to 3.0 g/10 min and even more preferably from 0.8 to 2.0.

The multimodal metallocene catalysed linear low density polyethylene (mLLDPE) further has a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50, preferably from 25 to 40, more preferably from 28 to 35.

The multimodal metallocene catalysed linear low density polyethylene (mLLDPE) is a copolymer of ethylene with at least two different comonomers selected from alpha-olefins having from 4 to 10 carbon atoms, e.g. 1-butene, 1-hexene, 1-octene, preferably 1-butene and 1-hexene.

The total amount of 1-butene, based on the multimodal metallocene catalysed linear low density polyethylene (mLLDPE), is in the range of from 0.1 to 1.0 wt%, preferably 0.2 to 0.8 wt% and more preferably 0.3 to 0.6 wt%.

The total amount of 1-hexene, based on multimodal metallocene catalysed linear low density polyethylene (mLLDPE), is in the range of from 2.0 to 20.0 wt%, preferably 4.0 to 18.0 wt% and more preferably 6.0 to 15.0 wt%.

In an embodiment, the multimodal metallocene catalysed linear low density polyethylene (mLLDPE) consists of an ethylene polymer component (A), which consists of an ethylene polymer fraction (A-1) and an ethylene polymer fraction (A-2), and an ethylene polymer component (B).

Preferably, the alpha-olefin comonomer having from 4 to 10 carbon atoms of ethylene polymer component (A) is different from the alpha-olefin comonomer having from 4 to 10 carbon atoms of ethylene polymer component (B), more preferably the alpha-olefin comonomer having from 4 to 10 carbon atoms of ethylene polymer component (A) is selected from 1-butene, 1-hexene and 1-octene, more preferably is 1-butene; and the alpha-olefin comonomer having from 4 to 10 carbon atoms of ethylene polymer component (B) is preferably selected from 1-hexene and 1-octene, more preferably is 1-hexene.

The comonomer type for the polymer fractions (A-1) and (A-2) is the same, thus the same alpha-olefin comonomer having from 4 to 10 carbon atoms is used for fraction (A-1) and (A-2), more preferably both fractions therefore have 1-butene as comonomer.

The total amount (wt%) of 1-butene present in the ethylene polymer component (A) is in the range of from 0.5 to 5.0 wt%, preferably of from 0.6 to 4.0 wt%, more preferably of from 0.8 to 3.0 wt%, even more preferably of from 1.0 to 2.0 wt%, based on the ethylene polymer component (A).

The total amount (wt%) of 1-hexene, present in the ethylene polymer component (B) is in the range of from 15.0 to 25.0 wt%, preferably of from 16.0 to 22.0 wt%, more preferably of from 17.0 to 20.0 wt%, based on the ethylene polymer component (B).

The multimodal metallocene catalysed linear low density polyethylene (mLLDPE) is referred herein as "multimodal", since the ethylene polymer component (A), including ethylene polymer fractions (A-1) and (A-2), and ethylene polymer component (B) have been produced under different polymerization conditions resulting in different Melt Flow Rates (MFR, e.g. $MFR_2$). I.e. the multimodal metallocene catalysed linear low density polyethylene (mLLDPE) is multimodal at least with respect to difference in MFR of the ethylene polymer components (A) and (B).

The $MFR_2$ of the ethylene polymer fractions (A-1) and (A-2) may be different from each other, i.e. ethylene polymer fractions (A-2) has a higher $MFR_2$ than ethylene polymer fractions (A-1), or may be the same.

The ethylene polymer fraction (A-1) has a $MFR_2$ (190°C, 2.16 kg, ISO 1133) in the range of from 1.0 to 15.0 g/10 min, preferably of from 1.5 to 13.0 g/10 min, more preferably of from 2.0 to 11.0 g/10 min and even more preferably of from 2.5 to 10.0 g/10 min.

The ethylene polymer fraction (A-2) preferably has a $MFR_2$ (190°C, 2.16 kg, ISO 1133) in the range of from 2.0 to 30.0 g/10 min, preferably of from 2.5 to 20.0 g/10 min, more preferably of from 3.0 to 15.0 g/10 min, like 3.5 to 10.0 g/10 min.

The $MFR_2$ of the ethylene polymer components (A) and (B) are also different from each other. The ethylene

polymer component (A) has a $MFR_2$ in the range of from 2.0 to 30 g/10 min, preferably of from 2.5 to 20 g/10 min, more preferably of from 3.0 to 15 g/10 min and even more preferably of from 3.2 to 10 g/10 min.

The ethylene polymer component (B) has a $MFR_2$ in the range of from 0.01 to 1.5 g/10 min, preferably of from 0.05 to 1.2 g/10 min, more preferably of from 0.1 to 1.0 g/10 min and even more preferably of from 0.2 to 0.8 g/10 min.

In an embodiment of the invention it is preferred the ratio of the $MFR_2$ of ethylene polymer component (A) to the $MFR_2$ of the final mLLDPE is at least 2.5 to 20.0, preferably 3.0 to 15.0 and more preferably of 3.5 to 10.0.

Naturally, in addition to multimodality with respect to, i.e. difference between, the $MFR_2$ of ethylene polymer components (A) and (B), the mLLDPE of the invention can also be multimodal e.g. with respect to one or both of the two further properties:

multimodality with respect to, i.e. difference between,

- the comonomer type and/or content(s) present in the ethylene polymer components (A) and (B); and/or
- the density of the ethylene polymer components (A) and (B).

Even more preferably the mLLDPE used according the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of from 920 to 950 $kg/m^3$, preferably of from 925 to 950 $kg/m^3$, more preferably from 930 to 945 $kg/m^3$ and/or the density of the ethylene polymer component (B) is in the range of from 880 to 915 $kg/m^3$, preferably of from 885 to 910 $kg/m^3$, and more preferably in the range of from 890 to 905 $kg/m^3$.

The polymer fraction (A-1) has a density in the range of from 920 to 960 $kg/m^3$, preferably of 925 to 955 $kg/m^3$, more preferably of 930 to 950 $kg/m^3$, like 935 to 945 $kg/m^3$.

The density of the polymer fraction (A-2) is in the range of from 930 to 950 $kg/m^3$, preferably of 935 to 945 $kg/m^3$.

The density of polymer fractions (A-1) and (A-2) may be the same or may be different.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the mLLDPE, preferably in an amount of 32.0 to 55.0 wt% and even more preferably in an amount of 34.0 to 45.0 wt%.

Thus, the ethylene polymer component (B) is present in an amount of 70.0 to 30.0 wt% based on the mLLDPE, preferably in an amount of 68.0 to 45.0 wt% and more preferably in an amount of 66.0 to 55.0 wt%.

The mLLDPE can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce the mLLDPE. In this case, the reaction conditions in the two slurry reactors are chosen in a way that in the two slurry reactors different products in view of MFR and/or density are produced.

Such a process is described inter alia in WO 2016/198273, WO 2021/009189, WO 2021/009190, WO 2021/009191 and WO 2021/009192. Full details of how to prepare suitable mLLDPE-1 can be found in these references.

A suitable process is the Borstar PE 3G process.

The mLLDPE used according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases, it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final mLLDPE. This can counted as part of the first ethylene polymer component (A).

*Catalyst*

The mLLDPE used according to the invention is one made using a metallocene catalyst. A metallocene catalyst

comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

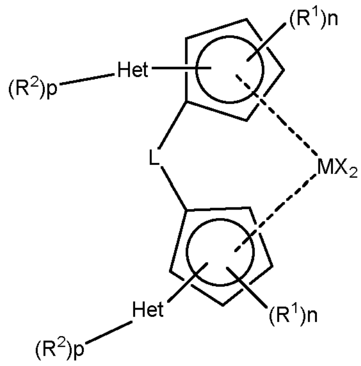

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group; each R is $C_{1-10}$-alkyl or phenyl group optionally substituted by 1 to 3 $C_{1-6}$-alkyl groups; and
each p is 0 to 1.

Preferably, the compound of formula (I) has the structure

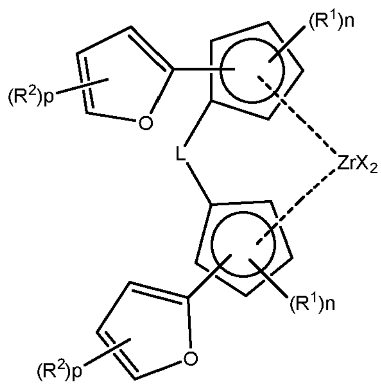

(I′)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

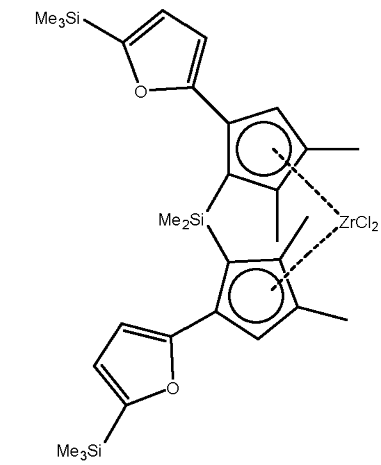

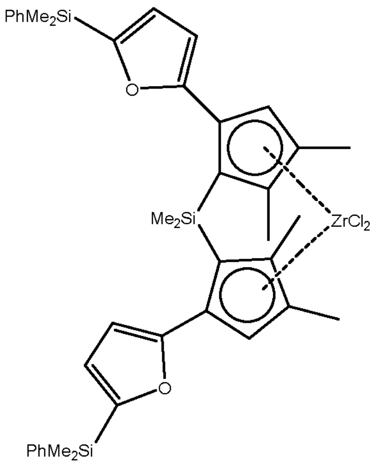

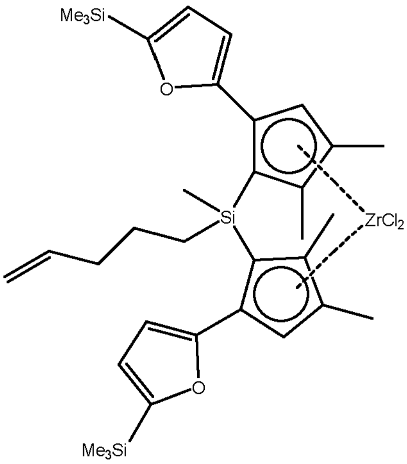

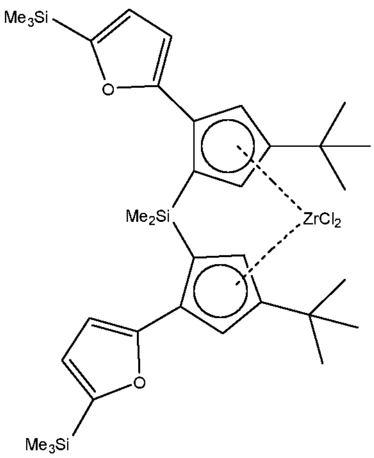

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the mLLDPE are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The mLLDPE may optional contain additives and/or fillers.

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

## Monolayer blown film

The monolayer film of the invention can be prepared using blown extrusion techniques that are well known in the art. An appropriate blend of the components required for the layer can be blended and coextruded. It will be appreciated that the layer of the film of the invention may also contain standard polymer additives if required.

The monolayer film of the invention may have a thickness of 20 to 120 $\mu$m, preferably 30 to 100 $\mu$m and more preferably 40 to 80 $\mu$m. Films of the invention are preferably not stretched in the machine or transverse or biaxial direction.

The films of the invention are characterized by a dart-drop impact strength (DDI) determined according to ASTM

D1709, method A on a 40 μm monolayer test blown film of at least 150 g up to 1200 g , preferably 200 g up to 1100 g and more preferably 250 g up to 1000 g.

Films according to the present invention furthermore have good stiffness (tensile modulus measured on a 40 μm monolayer test blown film according to ISO 527-3), i.e. > 250 MPa (in both directions).

Thus, the films according to the present invention have in addition a tensile modulus (measured on a 40 μm monolayer test blown film according to ISO 527-3) in machine direction (MD) in the range of from > 250 MPa to 700 MPa, preferably of from 300 MPa to 600 MPa and in transverse dircetion (TD) in the range of from > 300 MPa to 800 MPa, preferably of from 350 MPa to 700 MPa.

In an embodiment of the invention the film has

i) a tensile modulus (measured on a 40 μm monolayer test blown film according to ISO 527-3) in machine direction (MD) in the range of from 300 MPa to 500 MPa,
ii) a tensile modulus (measured on a 40 μm monolayer test blown film according to ISO 527-3) in transverse dircetion (TD) in the range of from 350 MPa to 600 MPa, and
iii) a dart-drop impact strength (DDI) determined according to ASTM D1709, method A on a 40 μm monolayer test blown film in the range of 350 to 1000 g.

In another embodiment of the invention the film has

i) a tensile modulus (measured on a 40 μm monolayer test blown film according to ISO 527-3) in machine direction (MD) in the range of from 450 MPa to 600 MPa,
ii) a tensile modulus (measured on a 40 μm monolayer test blown film according to ISO 527-3) in transverse dircetion (TD) in the range of from 500 MPa to 800 MPa, and
iii) a dart-drop impact strength (DDI) determined according to ASTM D1709, method A on a 40 μm monolayer test blown film in the range of 200 to 500 g.

The inventive films are fully recyclable and thus improves sustainability, as it is in the most preferred embodiment a "100% PE" solution with no other polymer than ethylene based polymers being present.

In another embodiment the inventive film contains at least 90 wt% of PE polymers, more preferably 95 to 99 wt% of PE polymers (difference to 100 wt% can be other polymers than PE), and is thus also suitable for being recycled.

The films according to the present invention are highly useful for being used in various packaging applications, wherein applications related to food packaging are preferred. Furthermore the films according to the present invention may be used as a layer in multilayer polyethylene based blown films, preferably as core layer in multilayer polyethylene based blown films.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$\log A = x \cdot \log B + (1 - x) \cdot \log C$$

$$C = 10^{\wedge} \frac{(\log A - x.\log B)}{(1-x)}$$

For Component B:

B = $MFR_2$ of Component (A)
C = $MFR_2$ of Component (B)
A = final $MFR_2$ (mixture) of multimodal polyethylene copolymer (P)
X = weight fraction of Component (A)

For Fraction (A-2):

B = $MFR_2$ of $1^{st}$ fraction (A-1)
C = $MFR_2$ of $2^{nd}$ fraction (A-2)
A = final $MFR_2$ (mixture) of loop polymer (= Component (A))
X = weight fraction of the $1^{st}$ fraction (A-1)

**Density**

Density of the polymer was measured according to ASTM; D792, Method B (density by balance at 23°C) on compression moulded specimen prepared according to EN ISO 1872-2 (February 2007) and is given in $kg/m^3$.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal ($\delta$+) at 30.00 ppm.

The amount of ethylene was quantified using the integral of the methylene ($\delta$+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_*B2$

sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:


Klimke, K., Parkinson, M., Piel, C., Kaminsky, W., Spiess, H.W., Wilhelm, M., Macromol. Chem. Phys. 2006;207:382. Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239

Griffin, J.M., Tripon, C., Samoson, A., Filip, C., and Brown, S.P., Mag. Res. in Chem. 2007 45, S1, S198

Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443

Busico, V., Cipullo, R., Monaco, G., Vacatello, M., Segre, A.L., Macromoleucles 30 (1997) 6251

Zhou, Z., Kuemmerle, R., Qiu, X., Redwine, D., Cong, R., Taha, A., Baugh, D. Winniford, B., J. Mag. Reson. 187 (2007) 225

Busico, V., Carbonniere, P., Cipullo, R., Pellecchia, R., Severn, J., Talarico, G., Macromol. Rapid Commun. 2007, 28, 1128

Resconi, L., Cavallo, L., Fait, A., Piemontesi, F., Chem. Rev. 2000, 100, 1253


**Dart drop strength (DDI): Impact resistance by free-falling dart method**

This test method covers the determination of the energy that causes films to fail under specified conditions of impact of a free-falling dart from a specified height that would result in failure of 50 % of the specimens tested (ASTM D1709; Alternative testing technique - method A).

By this technique, successive groups of twenty specimens each are tested. One missile weight is employed for each group and missile weight is varied in increments from group to group.

Deviating from ASTM D1709-16a the test was performed on several film strips of a sample with at least 4 different weights. 20 specimens per weight were tested, so that a break range of 5 % - 95 % was covered. It must be ensured that at least one weight is determined in the breaking range of 5 % - 25 %, at least two weights in the breaking range of 30 % - 70 %, and at least one weight in the breaking range of 75 % - 95 %. The selection of the weights can be done in uneven steps. A film strip was taken across the width of the sample and measured on a thickness measuring device.

Standard conditions:

Conditioning time: > 96 h

Test temperature: 23 °C

Dart head material: phenolic

Dart diameter: 38 mm
Drop height: 660 mm

Results:

Impact failure weight - 50% [g]

**Tensile modulus**

Tensile modulus (E-Mod (MPa) was measured in machine and/or transverse direction according to ISO 527-3 on film samples prepared as described under the Film Sample preparation with film thickness of 60 μm and at a cross head speed of 1 mm/min for the modulus.

**Film sample preparation**

The test films consisting of the inventive blend and respective comparative polymers of 40 μm thickness, were prepared using a Collin 30 lab scale mono layer blown film line.The film samples were produced at 194°C, a 1:2.5 blow-up ratio, frostline distance of 120 mm.

**Examples:**

*Materials used:*

Multimodal Ziegler-Natta catalysed linear low density polyethylene (znLLDPE-1):

FX1001: multimodal alpha-olefin terpolymer commercially available by Borealis AG, with density of 931 $kg/m^3$, a $MFR_5$ (190°C/5 kg) of 0.9 g/10min, Tm 127°C; produced with a Ziegler-Natta catalyst. It contains antioxidant.

For Comparative Example CE3 as mLLDPE: Anteo™ FK1820: bimodal ethylene/1-butene/1-hexene terpolymer with a density of 918 $kg/m^3$, $MFR_2$ (190°C/2.16kg) of 1.5 g/10min, Tm 122°C, produced with a metallocene catalyst; commercially available from Borouge. It contains antioxidant and processing aid.

**Cat.Example: Catalyst preparation**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring 40 rpm for MAO/tol/MC addition. MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Catalyst for Comparative Examples (CAT2)**

As catalyst CAT2 an alumoxane containing, supported catalyst containing metallocene bis(1-methyl-3-n-butylcyclopentadienyl) zirconium (IV) chloride and with enhanced ActivCat® activator technology from Grace was used.

**Catalyst for preparing znLLDPE for Inventive Examples IE4 and IE5, as well as for Comparative Examples CE3, CE4 and CE5 (CAT3)**

A solid polymerization catalyst component produced as described in Example 1 of EP 1378528 was used together with triethylaluminium cocatalyst so that the molar ratio of Al/Ti was about 15.

**Polymerization:**

Borstar pilot plant with a 3-reactor set-up (loop1 - loop2 - GPR 1) and a prepolymerization loop reactor.

mLLDPE (mLLDPE1 - mLLDPE3) (for IE1, IE2, IE3, IE4 and IE5) and comparative mLLDPE (for CE1, CE2 and CE5) was produced by using the polymerization conditions as given in Table 1.
znLLDPE-2 (for IE4, IE5 and CE3) was produced by using the polymerization conditions as given in Table 3.

**Table 1:** Polymerization conditions for mLLDPE-1, mLLDPE-2, mLLDPE-3 and comparative mLLDPE

| | mLLDPE-1 for IE1, IE2 and IE3 | Comparative mLLDPE for CE1, CE2 and CE3 | mLLDPE-2 for IE4 | mLLDPE-3 for IE5 |
|---|---|---|---|---|
| **Catalyst** | CAT1 | CAT2 | CAT1 | CAT1 |
| **Prepoly reactor** | | | | |
| Catalyst feed (g/h) | 35 | 29.0 | 32 | 35 |
| Temp. (°C) | 50 | 50.0 | 50 | 50 |
| Press. (kPa) | 5639 | 5718.9 | 5606 | 5617 |
| C2 (kg/h) | 4.0 | 4.0 | 4.0 | 4.0 |
| H2(g/h) | 0.04 | 0.04 | 0.03 | 0.03 |
| C4 (g/h) | 81.9 | 168.4 | 78.8 | 80.6 |
| Split (wt%) | 3.4 | 2.7 | 3.6 | 3.5 |
| **loop 1 Fraction (A-1)** | | | | |
| Temp. (°C) | 85 | 85.0 | 85 | 85 |
| Press. (kPa) | 5544 | 5557.6 | 5606 | 5537 |
| C2 conc. (mol%) | 3.5 | 3.1 | 4.0 | 3.7 |
| H2/C2 ratio (mol/kmol) | 0.41 | 0.2 | 0.39 | 0.50 |
| C4/C2 ratio (mol/kmol) | 41 | 85.4 | 41.0 | 40 |
| Split (wt%) | 17.6 | 17.2 | 17.9 | 17.8 |
| Density (kg/m3) of loop 1 material (fraction (A-1)) | 941 | 938 | 940.1 | 943 |
| MFR2 (g/10 min) of loop 1 material (fraction (A-1)) | 5.0 | 3.2 | 2.2 | 10.0 |
| **loop 2** | | | | |
| Temp. (°C) | 85 | 85.0 | 85 | 85 |
| Press. (kPa) | 5325 | 5365.5 | 5335 | 5337 |
| C2 conc. (mol%) | 3.5 | 3.1 | 4.2 | 4.1 |
| H2/C2 ratio (mol/kmol) | 0.6 | 0.1 | 0.5 | 0.5 |
| C4/C2 ratio (mol/kmol) | 29 | 88.4 | 27 | 28 |
| Split (wt%) | 20.4 | 19.2 | 20.7 | 20 |

| | | | | |
|---|---|---|---|---|
| Density (kg/m3) after loop 2 (component (A)) | 940.7 | 938.5 | 940.3 | 942.3 |
| MFR2 (g/10 min) after loop 2 (component (A)) | 5.8 | 3.5 | 4.7 | 7.5 |
| MFR2 (g/10 min) of loop 2 material (fraction (A-2)) | 6.8 | 3.7 | 10.4 | 5.5 |
| Density (kg/m3) of loop 2 material (fraction (A-2)) | 941 | 939 | 940.5 | 941 |
| C4 (wt%) after loop 2 material (Component (A)) | 1.21 | 1.03 | 1.19 | 1.21 |
| **GPR** | | | | |
| Temp. (°C) | 75.0 | 75.0 | 75 | 75 |
| Press. (kPa) | 2000.0 | 2000 | 2000 | 2000 |
| H2/C2 ratio (mol/kmol) | 1.18 | 0.2 | 1.02 | 1.05 |
| C6/C2 ratio (mol/kmol) | 14.5 | 36.2 | 11.78 | 14.04 |
| Split (wt%) | 58.6 | 61.0 | 57.9 | 58.7 |
| MFR2 (g/10 min) of GPR material (Component (B)) | 0.5 | 0.6 | 0.3 | 0.3 |
| Density (kg/m3) of GPR material (Component (B)) | 891 | 899 | 900 | 891 |
| C6 (wt%) of GPR material Component (B)) | 18.60 | 15.41 | 12.08 | 18.23 |

The polymers were mixed with 2400 ppm of Irganox B561 and 270 ppm of Dynamar FX 5922 compounded and extruded under nitrogen atmosphere to pellets by using a JSW extruder so that the SEI was 230 kWh/kg and the melt temperature 250°C.

**Table 2:** Material properties of mLLDPE-1, mLLDPE-2, mLLDPE-3 and Comparative LLDPE

| Material | mLLDPE-1 | mLLDPE-2 | mLLDPE-3 | Comparative LLDPE |
|---|---|---|---|---|
| $MFR_2$ (g/10 min) (final) | 1.3 | 1.0 | 1.0 | 1.2 |
| $MFR_{21}$ (g/10 min) | 38.7 | 29.6 | 30.1 | 22.9 |
| $MFR_{21}/MFR_2$ | 29.8 | 29.6 | 30.1 | 19.1 |
| Density ($kg/m^3$) | 913 | 917 | 913 | 915 |
| C4 (wt%) | 0.5 | 0.5 | 0.5 | 0.4 |
| C6 (wt%) | 10.7 | 7.0 | 10.9 | 9.4 |
| $MFR_2(A)/MFR_2(final)$ | 4.5 | 4.7 | 7.5 | 3.1 |

**Table 3:** Polymerization conditions for znLLDPE-2

| | znLLDPE-2 |
|---|---|
| **Prepoly reactor** | |
| Temperature (°C) | 70 |
| Pressure (kPa) | 5777 |
| Split (wt%) | 2 |
| **First loop reactor** | |
| Temperature (°C) | 95 |

(continued)

| | |
|---|---|
| **First loop reactor** | |
| Pressure (kPa) | 5503 |
| C2 (mol%) | 4.9 |
| H2/C2 (mol/kmol) | 308 |
| MFR2 (g/10 min) of homopolymer fraction (A-1) | 205 |
| Density of homopolymer fraction (A-1) | 970 |
| Split (wt%) | 18 |
| **Second loop reactor** | |
| Temperature (°C) | 95 |
| Pressure (kPa) | 5392 |
| C2 (mol%) | 5.6 |
| H2/C2 (mol/kmol) | 606 |
| Split (wt%) | 26 |
| Density (kg/m$^3$) after loop 2 (homopolymer (A)) | 970 |
| MFR2 (g/10 min) after loop 2 (homopolymer (A)) | 420 |
| Density (kg/m$^3$) of homopolymer fraction (A-2) | 970 |
| MFR2 (g/10 min) of homopolymer fraction (A-2) | 729 |
| **Gas phase reactor** | |
| Temperature (°C) | 82 |
| Pressure (kPa) | 1985 |
| C2 (mol%) | 13.2 |
| H2/C2 (mol/kmol) | 22.0 |
| C4/C2 (mol/kmol) | 98.1 |
| C6/C2 (mol/kmol) | 128.0 |
| Split (wt%) | 54 |

**Table 4:** Material properties of znLLDPE-2

| **Material** | **znLLDPE-2** |
|---|---|
| $MFR_2$ (g/10 min) (final) | 0.38 |
| $MFR_5$ (g/10 min) (final) | 1.58 |
| $MFR_{21}$ (g/10 min) (final) | 35.2 |
| Density (kg/m$^3$) | 941 |
| C4 (wt%) | 0.9 |
| C6 (wt%) | 3.1 |

**Monolayer blown films**

The above produced mLLDPEs were blended with FX1001 or znLLDPE-2 directly on the film extrusion line.

The following films have been produced with the above described method (film sample preparation).

**Table 5:** Inventive and Comparative Films

| | | IE1 | CE1 | IE2 | IE3 | CE2 | IE4 | CE3 | IE5 | CE4 |
|---|---|---|---|---|---|---|---|---|---|---|
| FX1001 | wt% | 90 | 90 | 75 | 55 | 55 | - | - | - | - |
| znLLDPE-2 | w% | - | - | - | - | - | 75 | 75 | 75 | 75 |
| mLLDPE-1 | wt% | 10 | - | 25 | 45 | - | - | - | - | - |
| Comparative mLLDPE | wt% | - | 10 | - | - | 45 | - | - | - | 25 |
| mLLDPE-2 | wt% | - | - | - | - | - | 25 | - | - | - |
| mLLDPE-3 | wt% | - | - | - | - | - | - | - | 25 | - |
| FK1820 | wt% | - | - | - | - | - | - | 25 | - | |
| TM/MD | MPa | 406 | 383 | 358 | 303 | 310 | 507 | 497 | 490 | 465 |
| TM/TD | MPa | 518 | 457 | 452 | 371 | 322 | 680 | 718 | 683 | 611 |
| DDI | g | 402 | 360 | 540 | 888 | 546 | 271 | 212 | 355 | 249 |

The data demonstrates that using the specific mLLDPEs as blend partner for the znLLDPE leads to an improved balance of stiffness and toughness compared to films, where the Comparative mLLDPE or FK1820 has been used.

## Claims

**1.** Monolayer polyethylene blown film comprising

a) 50.0 wt% to 95.0 wt%, based on the total weight of the monolayer polyethylene blown film, of a multimodal Ziegler-Natta catalysed linear low density polyethylene (znLLDPE) having a density in the range of from 925 to 950 kg/$m^3$ (ISO 1183) and an $MFR_5$ (190°C, 5 kg, ISO 1133) in the range of from 0.1 to 6.0 g/10 min; and
b) 5.0 wt% to 50.0 wt%, based on the total weight of the monolayer polyethylene blown film, of a multimodal metallocene catalysed linear low density polyethylene (mLLDPE) having a density in the range of from 880 to 925 kg/$m^3$ (ISO 1183), an $MFR_2$ (190°C, 2.16 kg, ISO 1133) in the range of from 0.1 to 6.0 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50;

the total amounts of a) + b) summing up to 100 wt%.

**2.** Monolayer polyethylene blown film according to claim 1, wherein the multimodal metallocene catalysed linear low density polyethylene (mLLDPE) consists of an ethylene polymer component (A), which consists of an ethylene polymer fraction (A-1) and an ethylene polymer fraction (A-2), and an ethylene polymer component (B).

**3.** Monolayer polyethylene blown film according to claim 1 or 2, wherein the multimodal metallocene catalysed linear low density polyethylene (mLLDPE) is a copolymer of ethylene with 1-butene and 1-hexene, whereby

the total amount of 1-butene, based on the multimodal metallocene catalysed linear low density polyethylene (mLLDPE), is in the range of from 0.1 to 1.0 wt%, preferably 0.2 to 0.8 wt% and more preferably 0.3 to 0.6 wt% and the total amount of 1-hexene, based on multimodal metallocene catalysed linear low density polyethylene (mLLDPE), is in the range of from 2.0 to 20.0 wt%, preferably 4.0 to 18.0 wt% and more preferably 6.0 to 15.0 wt%.

**4.** Monolayer polyethylene blown film according to claim 2 or 3, wherein in the multimodal metallocene catalysed linear low density polyethylene (mLLDPE) the total amount (wt%) of 1-butene present in the ethylene polymer component (A) is in the range of 0.5 to 5.0 wt%, preferably of 0.6 to 4.0 wt%, more preferably of 0.8 to 3.0 wt%, even more preferably of 1.0 to 2.0 wt%, based on the ethylene polymer component (A) and
the total amount (wt%) of 1-hexene, present in the ethylene polymer component (B) is in the range of 15.0 to 25.0 wt%, preferably of 16.0 to 22.0 wt%, more preferably of 17.0 to 20.0 wt%, based on the ethylene polymer component (B).

5. Monolayer polyethylene blown film according to any of the preceding claims 2 to 4, wherein in the multimodal metallocene catalysed linear low density polyethylene (mLLDPE) the ethylene polymer fraction (A-1) has a $MFR_2$ (190°C, 2.16 kg, ISO 1133) in the range of from 1.0 to 15.0 g/10 min, preferably of from 1.5 to 13.0 g/10 min, more preferably of from 2.0 to 11.0 g/10 min and even more preferably of from 2.5 to 10.0 g/10 min and

the ethylene polymer fraction (A-2) preferably has a $MFR_2$ (190°C, 2.16 kg, ISO 1133) in the range of from 2.0 to 30.0 g/10 min, preferably of from 2.5 to 20.0 g/10 min, more preferably of from 3.0 to 15.0 g/10 min, like 3.5 to 10.0 g/10 min and/or wherein
the ethylene polymer component (A) has a $MFR_2$ in the range of from 2.0 to 30 g/10 min, preferably of from 2.5 to 20 g/10 min, more preferably of from 3.0 to 15 g/10 min and even more preferably of from 3.2 to 10 g/10 min and the ethylene polymer component (B) has a $MFR_2$ in the range of from 0.01 to 1.5 g/10 min, preferably of from 0.05 to 1.2 g/10 min, more preferably of from 0.1 to 1.0 g/10 min and even more preferably of from 0.2 to 0.8 g/10 min and/or wherein
the ratio of the $MFR_2$ of ethylene polymer component (A) to the $MFR_2$ of the final mLLDPE is at least 2.5 to 20.0, preferably 3.0 to 15.0 and more preferably of 3.5 to 10.0.

6. Monolayer polyethylene blown film according to any of the preceding claims 2 to 5, wherein in the multimodal metallocene catalysed linear low density polyethylene (mLLDPE) the density of the ethylene polymer component (A) is in the range of from 920 to 950 kg/m$^3$, preferably of from 925 to 950 kg/m$^3$, more preferably from 930 to 945 kg/m$^3$ and/or the density of the ethylene polymer component (B) is in the range of from 880 to 915 kg/m$^3$, preferably of from 885 to 910 kg/m$^3$, and more preferably in the range of from 890 to 905 kg/m$^3$ and/or

the polymer fraction (A-1) has a density in the range of from 920 to 960 kg/m$^3$, preferably of 925 to 955 kg/m$^3$, more preferably of 930 to 950 kg/m$^3$, like 935 to 945 kg/m$^3$ and
the density of the polymer fraction (A-2) is in the range of from 930 to 950 kg/m$^3$, preferably of 935 to 945 kg/m$^3$, whereby he density of polymer fractions (A-1) and (A-2) may be the same or may be different.

7. Monolayer polyethylene blown film according to any of the preceding claims 1 to 6, wherein the multimodal metallocene catalysed linear low density polyethylene (mLLDPE) is produced in the presence of metallocene complex of formula (I):

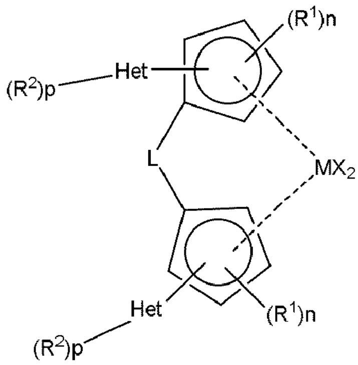

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group;
each n is 1 to 2;
each $R_2$ is the same or different and is a $C_{1-6}$-alkyl group, $C_{1-6}$-alkoxy group or -Si(R)$_3$ group; each R is $C_{1-10}$-alkyl or phenyl group optionally substituted by 1 to 3 $C_{1-6}$-alkyl groups; and
each p is 0 to 1.

8. Monolayer polyethylene blown film according to any of the preceding claims 1 to 7, wherein the multimodal Ziegler-Natta catalysed linear low density polyethylene (znLLDPE) comprises

(A) a lower molecular weight (LMW) homopolymer of ethylene and
(B) a higher molecular weight (HMW) terpolymer of ethylene, 1-butene and 1-hexene wherein the LMW homopolymer fraction (A) has a lower molecular weight than the HMW terpolymer fraction (B) and

the lower molecular weight fraction (A) of the znLLDPE has a melt index $MFR_2$ according to ISO 1133 (190°C) in the range of 200 to 1000 g/10min, preferably of 250 to 800 g/10min; a density according to ISO 1183 in the range of 940 to 980 kg/$m^3$, preferably 945 to 975 kg/$m^3$ and a comonomer content in the range of 0 to 2.5 mol%, preferably 0 to 2.0 mol% and the higher molecular weight fraction (B) has a lower $MFR_2$ and a lower density than the lower molecular weight fraction (A).

**9.** Monolayer polyethylene blown film according to claim 8, wherein the lower molecular weight (LMW) homopolymer of ethylene (A) consists of two homopolymer fractions (A-1) and (A-2), wherein the homopolymer fraction (A-1) preferably has a $MFR_2$ according to ISO 1133 (190°C) in the range of 100 to 400 g/10 min, more preferably in the range of 150 to 300 g/10 min, whereas the homopolymer fraction (A-2) preferably has a $MFR_2$ according to ISO 1133 (190°C) in the range of 450 to 1200 g/10 min, more preferably in the range of 600 to 1100 g/10 min and whereby the $MFR_2$ of fraction (A-1) is preferably lower than the $MFR_2$ of the total lower molecular weight (LMW) homopolymer of ethylene (A) and/or
the density of the two homopolymer fractions (A-1) and (A-2) may be the same or may be different and is in the range of 955 to 980 kg/$m^3$, preferably 965 to 980 kg/$m^3$ or 965 to 975 kg/$m^3$.

**10.** Monolayer polyethylene blown film according to any of the preceding claims 1 to 9, wherein the film has a dart-drop impact strength (DDI) determined according to ASTM D1709, method A on a 40 μm monolayer test blown film of at least 150 g up to 1200 g, preferably 200 g up to 1100 g and more preferably 250 g up to 1000 g.

**11.** Monolayer polyethylene blown film according to any of the preceding claims 1 to 10, wherein the film has in addition a tensile modulus (measured on a 40 μm monolayer test blown film according to ISO 527-3) in machine direction (MD) in the range of from > 250 MPa to 700 MPa, preferably of from 300 MPa to 600 MPa and in transverse dircetion (TD) in the range of from > 300 MPa to 800 MPa, preferably of from 350 MPa to 700 MPa.

**12.** Monolayer polyethylene blown film according to any of the preceding claims 1 to 9, wherein the film has

i) a tensile modulus (measured on a 40 μm monolayer test blown film according to ISO 527-3) in machine direction (MD) in the range of from 300 MPa to 500 MPa,
ii) a tensile modulus (measured on a 40 μm monolayer test blown film according to ISO 527-3) in transverse dircetion (TD) in the range of from 350 MPa to 600 MPa, and
ii)a dart-drop impact strength (DDI) determined according to ASTM D1709, method A on a 40 μm monolayer test blown film in the range of 350 to 1000 g.

**13.** Monolayer polyethylene blown film according to any of the preceding claims 1 to 9, wherein the film has

i) a tensile modulus (measured on a 40 μm monolayer test blown film according to ISO 527-3) in machine direction (MD) in the range of from 450 MPa to 600 MPa,
ii) a tensile modulus (measured on a 40 μm monolayer test blown film according to ISO 527-3) in transverse dircetion (TD) in the range of from 500 MPa to 800 MPa, and
iii) a dart-drop impact strength (DDI) determined according to ASTM D1709, method A on a 40 μm monolayer test blown film in the range of 200 to 500 g.

**14.** Use of a film according to any of the preceding claims 1 to 13 as packing material, in particular as a packing material for food and/or medical products.

**Patentansprüche**

**1.** Einschichtige Polyethylen-Blasfolie, umfassend

a) 50,0 Gew.-% bis 95,0 Gew.-%, bezogen auf das Gesamtgewicht der einschichtigen Polyethylen-Blasfolie, eines multimodalen Ziegler-Nattakatalysierten linearen Polyethylens geringer Dichte (znLLDPE) mit einer Dichte im Bereich von 925 bis 950 kg/$m^3$ (ISO 1183) und einem $MFR_5$ (190°C, 5 kg, ISO 1133) im Bereich von 0,1 bis

6,0 g/10 min; und

b) 5,0 Gew.-% bis 50,0 Gew.-%, bezogen auf das Gesamtgewicht der einschichtigen Polyethylen-Blasfolie, eines multimodalen metallocenkatalysierten linearen Polyethylens geringer Dichte (mLLDPE) mit einer Dichte im Bereich von 880 bis 925 kg/$m^3$ (ISO 1183), einem $MFR_2$ (190°C, 2. 16 kg, ISO 1133) im Bereich von 0,1 bis 6,0 g/10 min und ein Verhältnis von $MFR_{21}$ (190°C, 21,6 kg, ISO 1133) zu $MFR_2$ (190°C, 2,16 kg, ISO 1133), $MFR_{21}/MFR_2$, im Bereich von 22 bis 50;

wobei sich die Gesamtmengen von a) + b) auf 100 Gew.-% summieren.

**2.** Einschichtige Polyethylen-Blasfolie nach Anspruch 1, wobei das multimodale metallocenkatalysierte lineare Polyethylen geringer Dichte (mLLDPE) aus einer Ethylenpolymerkomponente (A), die aus einer Ethylenpolymerfraktion (A-1) und einer Ethylenpolymerfraktion (A-2) besteht, und einer Ethylenpolymerkomponente (B) besteht.

**3.** Einschichtige Polyethylen-Blasfolie nach Anspruch 1 oder 2, wobei das multimodale metallocenkatalysierte lineare Polyethylen geringer Dichte (mLLDPE) ein Copolymer von Ethylen mit 1-Buten und 1-Hexen ist, wobei

die Gesamtmenge an 1-Buten, bezogen auf das multimodale metallocenkatalysierte lineare Polyethylen geringer Dichte (mLLDPE), im Bereich von 0,1 bis 1,0 Gew.-%, vorzugsweise 0,2 bis 0,8 Gew.-% und bevorzugter 0,3 bis 0,6 Gew.-% liegt und

die Gesamtmenge an 1-Hexen, bezogen auf multimodales metallocenkatalysiertes lineares Polyethylen geringer Dichte (mLLDPE), im Bereich von 2,0 bis 20,0 Gew.-%, vorzugsweise 4,0 bis 18,0 Gew.-% und bevorzugter 6,0 bis 15,0 Gew.-% liegt.

**4.** Einschichtige Polyethylen-Blasfolie nach Anspruch 2 oder 3, wobei in dem multimodalen metallocenkatalysierten linearen Polyethylen geringer Dichte (mLLDPE) die Gesamtmenge (Gew.-%) des in der Ethylenpolymerkomponente (A) vorhandenen 1-Butens im Bereich von 0. 5 bis 5,0 Gew.-%, vorzugsweise 0,6 bis 4,0 Gew.-%, stärker bevorzugt 0,8 bis 3,0 Gew.-%, noch stärker bevorzugt 1,0 bis 2,0 Gew.-%, bezogen auf die Ethylenpolymerkomponente (A), und die Gesamtmenge (Gew.-%) an 1-Hexen, die in der Ethylenpolymerkomponente (B) vorhanden ist, im Bereich von 15,0 bis 25,0 Gew.-%, vorzugsweise von 16,0 bis 22,0 Gew.-%, bevorzugter von 17,0 bis 20,0 Gew.-%, bezogen auf die Ethylenpolymerkomponente (B), liegt.

**5.** Einschichtige Polyethylen-Blasfolie nach einem der vorhergehenden Ansprüche 2 bis 4, wobei in dem multimodalen metallocenkatalysierten linearen Polyethylen geringer Dichte (mLLDPE) die Ethylenpolymerfraktion (A-1) einen $MFR_2$ (190°C, 2. 16 kg, ISO 1133) im Bereich von 1,0 bis 15,0 g/10 min, vorzugsweise von 1,5 bis 13,0 g/10 min, stärker bevorzugt von 2,0 bis 11,0 g/10 min und noch stärker bevorzugt von 2,5 bis 10,0 g/10 min aufweist und

die Ethylenpolymerfraktion (A-2) vorzugsweise einen $MFR_2$ (190°C, 2,16 kg, ISO 1133) im Bereich von 2,0 bis 30,0 g/10 min, vorzugsweise von 2,5 bis 20,0 g/10 min, bevorzugter von 3,0 bis 15,0 g/10 min, wie 3,5 bis 10,0 g/10 min aufweist und/oder wobei

die Ethylenpolymerkomponente (A) einen $MFR_2$ im Bereich von 2,0 bis 30 g/10 min, vorzugsweise von 2,5 bis 20 g/10 min, stärker bevorzugt von 3,0 bis 15 g/10 min und noch stärker bevorzugt von 3,2 bis 10 g/10 min aufweist und

die Ethylenpolymerkomponente (B) einen $MFR_2$ im Bereich von 0,01 bis 1,5 g/10 min, vorzugsweise von 0,05 bis 1,2 g/10 min, stärker bevorzugt von 0,1 bis 1,0 g/10 min und noch stärker bevorzugt von 0,2 bis 0,8 g/10 min aufweist und/oder wobei

das Verhältnis des $MFR_2$ der Ethylenpolymerkomponente (A) zum $MFR_2$ des fertigen mLLDPE mindestens 2,5 bis 20,0, vorzugsweise 3,0 bis 15,0 und bevorzugter 3,5 bis 10,0 beträgt.

**6.** Einschichtige Polyethylen-Blasfolie nach einem der vorhergehenden Ansprüche 2 bis 5, wobei in dem multimodalen metallocenkatalysierten linearen Polyethylen geringer Dichte (mLLDPE) die Dichte der Ethylenpolymerkomponente (A) im Bereich von 920 bis 950 kg/$m^3$, vorzugsweise von 925 bis 950 kg/$m^3$, noch bevorzugter von 930 bis 945 kg/$m^3$ liegt und/oder die Dichte der Ethylenpolymerkomponente (B) im Bereich von 880 bis 915 kg/$m^3$, vorzugsweise von 885 bis 910 kg/$m^3$ und noch bevorzugter im Bereich von 890 bis 905 kg/$m^3$ liegt und/oder

die Polymerfraktion (A-1) eine Dichte im Bereich von 920 bis 960 kg/$m^3$, vorzugsweise von 925 bis 955 kg/$m^3$, bevorzugter von 930 bis 950 kg/$m^3$, wie 935 bis 945 kg/$m^3$ aufweist und

die Dichte der Polymerfraktion (A-2) im Bereich von 930 bis 950 kg/$m^3$, vorzugsweise von 935 bis 945 kg/$m^3$ liegt, wobei die Dichte der Polymerfraktionen (A-1) und (A-2) gleich oder unterschiedlich sein kann.

7. Einschichtige Polyethylen-Blasfolie nach einem der vorhergehenden Ansprüche 1 bis 6, wobei das multimodale metallocenkatalysierte lineare Polyethylen geringer Dichte (mLLDPE) in Gegenwart eines Metallocenkomplexes der Formel (I) hergestellt ist:

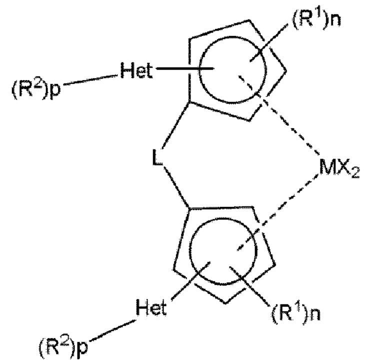

(I)

wobei jedes X unabhängig ein Halogenatom, eine $C_{1-6}$-Alkyl-, $C_{1-6}$-Alkoxygruppe, Phenyl- oder Benzylgruppe ist;
jedes Het unabhängig eine monocyclische heteroaromatische Gruppe ist, die mindestens ein Heteroatom, ausgewählt aus O oder S, enthält;
L ist $-R'_2Si-$, wobei jedes R' unabhängig $C_{1-20}$-Kohlenwasserstoff oder mit Alkoxy substituiertes C1-10-Alkyl mit 1 bis 10 Kohlenstoffatomen ist;
M ist Ti, Zr oder Hf;
jedes $R_1$ ist gleich oder verschieden und ist eine $C_{1-6}$-Alkylgruppe oder $C_{1-6}$-Alkoxygruppe;
jedes n ist 1 bis 2;
jedes $R_2$ gleich oder verschieden ist und eine $C_{1-6}$-Alkylgruppe, $C_{1-6}$-Alkoxygruppe oder $-Si(R)_3$-Gruppe ist;
jedes R ist $C_{1-10}$-Alkyl oder Phenylgruppe, die gegebenenfalls mit 1 bis 3 $C_{1-6}$-Alkylgruppen substituiert ist; und
jedes p ist 0 bis 1.

8. Einschichtige Polyethylen-Blasfolie nach einem der vorhergehenden Ansprüche 1 bis 7, wobei das multimodale Ziegler-Natta-katalysierte lineare Polyethylen geringer Dichte (znLLDPE) umfasst

(A) ein Homopolymer von Ethylen mit geringem Molekulargewicht (LMW) und
(B) ein Terpolymer mit höherem Molekulargewicht (HMW) von Ethylen, 1-Buten und 1-Hexen, wobei die LMW-Homopolymerfraktion (A) ein geringeres Molekulargewicht aufweist als die HMW-Terpolymerfraktion (B) und

die niedermolekulare Fraktion (A) des znLLDPE einen Schmelzindex $MFR_2$ nach ISO 1133 (190°C) im Bereich von 200 bis 1000 g/10min, vorzugsweise von 250 bis 800 g/10min, eine Dichte nach ISO 1183 im Bereich von 940 bis 980 kg/m$^3$, vorzugsweise von 945 bis 975 kg/m$^3$ und einen Comonomergehalt im Bereich von 0 bis 2,5 Mol-%, vorzugsweise 0 bis 2,0 Mol-% aufweist, und die Fraktion mit höherem Molekulargewicht (B) einen geringeren $MFR_2$ und eine geringere Dichte als die Fraktion mit geringerem Molekulargewicht (A) aufweist.

9. Einschichtige Polyethylen-Blasfolie nach Anspruch 8, wobei das Homopolymer von Ethylen mit geringerem Molekulargewicht (LMW) (A) aus zwei Homopolymerfraktionen (A-1) und (A-2) besteht, wobei die Homopolymerfraktion (A-1) vorzugsweise einen $MFR_2$ gemäß ISO 1133 (190°C) im Bereich von 100 bis 400 g/10 min, bevorzugter im Bereich von 150 bis 300 g/10 min aufweist, wohingegen die Homopolymerfraktion (A-2) vorzugsweise einen $MFR_2$ gemäß ISO 1133 (190°C) im Bereich von 450 bis 1200 g/10 min, vorzugsweise im Bereich von 600 bis 1100 g/10 min, aufweist und wobei der $MFR_2$ der Fraktion (A-1) vorzugsweise geringer ist als der $MFR_2$ des gesamten Homopolymers von Ethylen mit geringem Molekulargewicht (LMW) (A) und/oder
die Dichte der beiden Homopolymerfraktionen (A-1) und (A-2) gleich oder unterschiedlich sein kann und im Bereich von 955 bis 980 kg/m$^3$, vorzugsweise 965 bis 980 kg/m$^3$ oder 965 bis 975 kg/m$^3$ liegt.

10. Einschichtige Polyethylen-Blasfolie nach einem der vorhergehenden Ansprüche 1 bis 9, wobei die Folie eine Dart-Drop-Schlagzähigkeit (DDI), bestimmt nach ASTM D1709, Verfahren A, an einer einschichtigen 40 $\mu$m Prüfblasfolie von mindestens 150 g bis zu 1200 g, vorzugsweise 200 g bis zu 1100 g und bevorzugter 250 g bis zu 1000 g aufweist.

11. Einschichtige Polyethylen-Blasfolie nach einem der vorhergehenden Ansprüche 1 bis 10, wobei die Folie zusätzlich einen Zugmodul (gemessen an einer einschichtigen 40 $\mu$m Prüfblasfolie nach ISO 527-3) in Längsrichtung (Maschinenrichtung; MD) im Bereich von >250 MPa bis 700 MPa, vorzugsweise von 300 MPa bis 600 MPa und in Querrichtung (TD) im Bereich von >300 MPa bis 800 MPa, vorzugsweise von 350 MPa bis 700 MPa, aufweist.

**12.** Einschichtige Polyethylen-Blasfolie nach einem der vorhergehenden Ansprüche 1 bis 9, wobei die Folie aufweist

i) einen Zugmodul (gemessen an einer einschichtigen 40 μm Prüfblasfolie gemäß ISO 527-3) in Längsrichtung (MD) im Bereich von 300 MPa bis 500 MPa,
ii) einen Zugmodul (gemessen an einer einschichtigen 40 μm Prüfblasfolie nach ISO 527-3) in Querrichtung (TD) im Bereich von 350 MPa bis 600 MPa und
ii) eine Dart-Drop-Schlagzähigkeit (DDI), bestimmt nach ASTM D1709, Methode A, an einer einschichtigen 40 μm Prüfblasfolie im Bereich von 350 bis 1000 g.

**13.** Einschichtige Polyethylen-Blasfolie nach einem der vorhergehenden Ansprüche 1 bis 9, wobei die Folie aufweist

i) einen Zugmodul (gemessen an einer einschichtigen 40 μm Prüfblasfolie gemäß ISO 527-3) in Längsrichtung (MD) im Bereich von 450 MPa bis 600 MPa aufweist,
ii) einen Zugmodul (gemessen an einer einschichtigen 40 μm Prüfblasfolie nach ISO 527-3) in Querrichtung (TD) im Bereich von 500 MPa bis 800 MPa und
iii) eine Dart-Drop-Schlagzähigkeit (DDI), bestimmt nach ASTM D1709, Methode A, an einer einschichtigen 40 μm Prüfblasfolie im Bereich von 200 bis 500 g.

**14.** Verwendung einer Folie nach einem der vorhergehenden Ansprüche 1 bis 13 als Verpackungsmaterial, insbesondere als Verpackungsmaterial für Lebensmittel und/oder medizinische Produkte.

**Revendications**

**1.** Film soufflé de polyéthylène monocouche comprenant

a) 50,0 % en poids à 95,0 % en poids, sur la base du poids total du film soufflé de polyéthylène monocouche, d'un polyéthylène basse densité linéaire catalysé par Ziegler-Natta multimodal (znLLDPE) ayant une densité dans la plage allant de 925 à 950 kg/$m^3$ (norme ISO 1183) et un $MFR_5$ (190 °C, 5 kg, norme ISO 1133) dans la plage allant de 0,1 à 6,0 g/10 min ; et
b) 5,0 % en poids à 50,0 % en poids, sur la base du poids total du film soufflé de polyéthylène monocouche, d'un polyéthylène basse densité linéaire catalysé par un métallocène multimodal (mLLDPE) ayant une densité dans la plage allant de 880 à 925 kg/$m^3$ (norme ISO 1183), un $MFR_2$ (190 °C, 2,16 kg, norme ISO 1133) dans la plage de 0,1 à 6,0 g/10 min et un rapport du $MFR_{21}$ (190 °C, 21,6 kg, norme ISO 1133) sur $MFR_2$ (190 °C, 2,16 kg, norme ISO 1133), $MFR_{21}/MFR_2$, dans la plage allant de 22 à 50 ;

les quantités totales de a) + b) totalisant jusqu'à 100 % en poids.

**2.** Film soufflé de polyéthylène monocouche selon la revendication 1, dans lequel le polyéthylène basse densité linéaire catalysé par un métallocène multimodal (mLLDPE) est constitué d'un composant de type polymère d'éthylène (A), qui est constitué d'une fraction en polymère d'éthylène (A-1) et d'une fraction en polymère d'éthylène (A-2), et d'un composant de type polymère d'éthylène (B).

**3.** Film soufflé de polyéthylène monocouche selon la revendication 1 ou 2, dans lequel le polyéthylène basse densité linéaire catalysé par un métallocène multimodal (mLLDPE) est un copolymère d'éthylène avec 1-butène et 1-hexène, moyennant quoi

la quantité totale de 1-butène, basée sur le polyéthylène basse densité linéaire catalysé par un métallocène multimodal (mLLDPE), est dans la plage allant de 0,1 et 1,0 % en poids, de préférence de 0,2 à 0,8 % en poids et plus préférablement de 0,3 à 0,6 % en poids et
la quantité totale de 1-hexène, sur la base du polyéthylène basse densité linéaire catalysé par un métallocène multimodal (mLLDPE), est dans la plage allant de 2,0 à 20,0 % en poids, de préférence de 4,0 à 18,0 % en poids et plus préférablement de 6,0 à 15,0 % en poids.

**4.** Film soufflé de polyéthylène monocouche selon la revendication 2 ou 3, dans lequel, dans le polyéthylène basse

densité linéaire catalysé par un métallocène multimodal (mLLDPE), la quantité totale (% en poids) de 1-butène présent dans le composant de type polymère d'éthylène (A) est dans la plage allant de 0,5 à 5,0 % en poids, de préférence de 0,6 à 4,0 % en poids, de préférence de 0,8 à 3,0 % en poids, encore plus préférablement de 1,0 à 2,0 % en poids, sur la base du composant de type polymère d'éthylène (A) et
la quantité totale (% en poids) de 1-hexène, présente dans le composant de type polymère d'éthylène (B) est dans la plage allant de 15,0 à 25,0 % en poids, de préférence de 16,0 à 22,0 % en poids, de préférence de 17,0 à 20,0 % en poids, sur la base du composant de type polymère d'éthylène (B).

**5.** Film soufflé de polyéthylène monocouche selon l'une quelconque des revendications précédentes 2 à 4, dans lequel, dans le polyéthylène basse densité linéaire catalysé par un métallocène multimodal (mLLDPE), la fraction de polymère d'éthylène (A-1) a un $MFR_2$ (190 °C, 2,16 kg, norme ISO 1133) dans la plage de 1,0 à 15,0 g/10 min, de préférence de 1,5 à 13,0 g/10 min, de préférence de 2,0 à 11,0 g/10 min et encore plus préférablement de 2,5 à 10,0 g/10 min et

la fraction de polymère d'éthylène (A-2) a de préférence un $MFR_2$ (190 °C, 2,16 kg, norme ISO 1133) dans une plage de 2,0 à 30,0 g/10 min, de préférence de 2,5 à 20,0 g/10 min, de préférence de 3,0 à 15,0 g/10 min, comme 3,5 à 10,0 g/10 min et/ou dans lequel
le composant de type polymère d'éthylène (A) a un $MFR_2$ dans la plage de 2,0 à 30 g/10 min, de préférence de 2,5 à 20 g/10 min, de préférence entre 3,0 et 15 g/10 min et encore plus préférablement entre 3,2 et 10 g/10 min et
le composant de type polymère d'éthylène (B) a un $MFR_2$ dans la plage de 0,01 à 1,5 g/10 min, de préférence de 0,05 à 1,2 g/10 min, de préférence entre 0,1 et 1,0 g/10 min et encore plus préférablement entre 0,2 et 0,8 g/10 min et/ou dans lequel
le rapport du $MFR_2$ du composant de type polymère d'éthylène (A) sur le $MFR_2$ du mLLDPE final est d'au moins 2,5 à 20,0, de préférence 3,0 à 15,0 et plus préférablement de 3,5 à 10,0.

**6.** Film soufflé de polyéthylène monocouche selon l'une quelconque des revendications précédentes 2 à 5, dans lequel, dans le polyéthylène basse densité linéaire catalysé par un métallocène multimodal (mLLDPE), la densité du composant de type polymère d'éthylène (A) est dans la plage allant de 920 à 950 kg/$m^3$, de préférence de 925 à 950 kg/$m^3$, de préférence de 930 à 945 kg/$m^3$ et/ou la densité du composant de type polymère d'éthylène (B) est dans la plage allant de 880 à 915 kg/$m^3$, de préférence de 885 à 910 kg/$m^3$, et plus préférablement de 890 à 905 kg/$m^3$ et/ou

la fraction de polymère (A-1) a une densité dans la plage allant de 920 à 960 kg/$m^3$, de préférence de 925 à 955 kg/$m^3$, plus préférablement de 930 à 950 kg/$m^3$, comme 935 à 945 kg/$m^3$ et
la densité de la fraction de polymère (A-2) est dans la plage allant de 930 à 950 kg/$m^3$, de préférence de 935 à 945 kg/$m^3$, moyennant quoi la densité des fractions de polymère (A-1) et (A-2) peut être identique ou peut être différente.

**7.** Film soufflé de polyéthylène monocouche selon l'une quelconque des revendications précédentes 1 à 6, dans lequel le polyéthylène basse densité linéaire catalysé par un métallocène multimodal (mLLDPE) est produit en présence d'un complexe de métallocène de formule (I) :

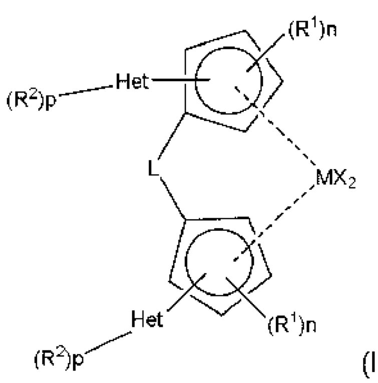

(I)

chaque X étant indépendamment un atome d'halogène, un groupe $C_{1-6}$-alkyle, $C_{1-6}$-alcoxy, un groupe phényle ou benzyle ;
chaque Het étant indépendamment un groupe hétéroaromatique monocyclique contenant au moins un hétéroatome choisi parmi O ou S ;
L étant -$R'_2Si$-, chaque R' étant indépendamment $C_{1-20}$-hydrocarbyle ou $C_{1-10}$-alkyle substitué par alcoxy ayant 1 à 10 atomes de carbone ;
M étant Ti, Zr ou Hf ;
chaque $R_1$ étant identique ou différent et étant un groupe $C_{1-6}$-alkyle ou $C_{1-6}$-alcoxy ;
chaque n étant 1 à 2 ;
chaque $R_2$ étant identique ou différent et étant un groupe $C_{1-6}$-alkyle, un groupe $C_{1-6}$-alcoxy ou un groupe -$Si(R)_3$ ; chaque R étant $C_{1-10}$-alkyle ou un groupe phényle éventuellement substitué par 1 à 3 groupes $C_{1-6}$-alkyle ; et chaque p étant 0 à 1.

**8.** Film soufflé de polyéthylène monocouche selon l'une quelconque des revendications précédentes 1 à 7, dans lequel le polyéthylène basse densité linéaire catalysé par Ziegler-Natta (ZnLDPE) multimodal comprend (A) un homopolymère d'éthylène à poids moléculaire inférieur (LMW) et

(B) un terpolymère d'éthylène, de 1-butène et de 1-hexène de poids moléculaire plus supérieur (HMW), dans lequel la fraction d'homopolymère LMW (A) a un poids moléculaire inférieur à la fraction de terpolymère HMW (B) et
la fraction de poids moléculaire inférieur (A) du znLLDPE a un indice de fusion $MFR_2$ selon la norme ISO 1133 (190 °C) dans la plage de 200 à 1 000 g/10min, de préférence de 250 à 800 g/10min ; une densité conforme à la norme ISO 1183 dans la plage de 940 à 980 kg/m$^3$, de préférence 945 à 975 kg/m$^3$ et une teneur en comonomères dans la plage de 0 à 2,5 % en moles, de préférence 0 à 2,0 % en moles et la fraction de poids moléculaire supérieur (B) a un $MFR_2$ inférieur et une densité inférieure à la fraction de poids moléculaire inférieur (A).

**9.** Film soufflé de polyéthylène monocouche selon la revendication 8, dans lequel l'homopolymère d'éthylène (A) de faible poids moléculaire (LMW) est constitué de deux fractions d'homopolymère (A-1) et (A-2), dans lequel la fraction d'homopolymère (A-1) a de préférence un $MFR_2$ selon la norme ISO 1133 (190 °C) dans la plage de 100 à 400 g/10 min, de préférence dans la plage de 150 à 300 g/10 min, alors que la fraction d'homopolymère (A-2) a de préférence un $MFR_2$ conforme à la norme ISO 1133 (190 °C) dans la plage de 450 à 1 200 g/10 min, plus préférablement dans la plage de 600 à 1 100 g/10 min et moyennant quoi le $MFR_2$ de fraction (A-1) est de préférence inférieur au $MFR_2$ de l'homopolymère d'éthylène (A) de poids moléculaire inférieur (LMW) total et/ou
la densité des deux fractions d'homopolymère (A-1) et (A-2) peut être la même ou différente et se situe dans la plage de 955 à 980 kg/m$^3$, de préférence de 965 à 980 kg/m$^3$ ou de 965 à 975 kg/m$^3$.

**10.** Film soufflé de polyéthylène monocouche selon l'une quelconque des revendications précédentes 1 à 9, dans lequel le film a une résistance à l'impact de chute au mouton (DDI) déterminée conformément à la norme ASTM D1709, méthode A sur un film soufflé de test monocouche de 40 $\mu$m d'au moins 150 g à 1 200 g, de préférence 200 g à 1 100 g et plus préférablement 250 g à 1 000 g.

**11.** Film soufflé de polyéthylène monocouche selon l'une quelconque des revendications précédentes 1 à 10, dans lequel le film a en plus un module de traction (mesuré sur un film soufflé de test monocouche de 40 $\mu$m selon la norme ISO 527-3) dans le sens machine (MD), dans la plage de > 250 MPa à 700 MPa, de préférence allant de 300 MPa à 600 MPa et dans le sens transversal (TD) dans une plage de > 300 MPa à 800 MPa, de préférence de 350 MPa à 700 MPa.

**12.** Film soufflé de polyéthylène monocouche selon l'une quelconque des revendications précédentes 1 à 9, dans lequel le film a

i) un module de traction (mesuré sur un film soufflé de test monocouche de 40 $\mu$m selon la norme ISO 527-3) dans le sens machine (MD) dans la plage de 300 MPa à 500 MPa,
ii) un module de traction (mesuré sur un film soufflé de test monocouche de 40 $\mu$m selon la norme ISO 527-3) dans le sens transversal (TD) dans la plage de 350 MPa à 600 MPa, et
iii) une résistance à l'impact de chute au mouton (DDI) déterminée selon la norme ASTM D1709, méthode A sur un film soufflé de test monocouche de 40 $\mu$m dans la plage de 350 à 1 000 g.

**13.** Film soufflé de polyéthylène monocouche selon l'une quelconque des revendications précédentes 1 à 9, dans lequel le film a

i) un module de traction (mesuré sur un film soufflé de test monocouche de 40 μm selon la norme ISO 527-3) dans le sens machine (MD) dans la plage de 450 MPa à 600 MPa,
ii) un module de traction (mesuré sur un film soufflé de test monocouche de 40 μm selon la norme ISO 527-3) dans le sens transversal (TD) dans la plage de 500 MPa à 800 MPa, et
iii) une résistance à l'impact de chute au mouton (DDI) déterminée selon la norme ASTM D1709, méthode A sur un film soufflé de test monocouche de 40 μm dans la plage de 200 à 500 g.

**14.** Utilisation d'un film selon l'une quelconque des revendications précédentes 1 à 13 comme matériau d'emballage, en particulier comme matériau d'emballage pour les produits alimentaires et/ou médicaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3101060 A
- WO 03066698 A
- WO 2008034630 A
- WO 2016198273 A
- WO 2021009189 A
- WO 2021009190 A
- WO 2021009191 A
- WO 2021009192 A
- EP 1378528 A


### Non-patent literature cited in the description


- **KLIMKE, K ; PARKINSON, M ; PIEL, C ; KAMINSKY, W ; SPIESS, H.W ; WILHELM, M.** *Macromol. Chem. Phys,* 2006, vol. 207, 382
- **PARKINSON, M. ; KLIMKE, K ; SPIESS, H.W ; WILHELM, M.** *Macromol. Chem. Phys,* 2007, vol. 208, 2128
- **POLLARD, M ; KLIMKE, K. ; GRAF, R. ; SPIESS, H.W ; WILHELM, M ; SPERBER, O ; PIEL, C ; KAMINSKY, W.** *Macromolecules,* 2004, vol. 37, 813
- **FILIP, X. ; TRIPON, C ; FILIP, C.** *J. Mag. Resn.,* 2005, vol. 176, 239
- **GRIFFIN, J.M. ; TRIPON, C ; SAMOSON, A. ; FILIP, C ; BROWN, S.P.** *Mag. Res. in Chem,* 2007, vol. 45 (S1), S198
- **CASTIGNOLLES, P. ; GRAF, R ; PARKINSON, M ; WILHELM, M ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R ; MONACO, G. ; VACATELLO, M ; SEGRE, A.L.** *Macromoleucles,* 1997, vol. 30, 6251
- **ZHOU, Z. ; KUEMMERLE, R. ; QIU, X. ; REDWINE, D. ; CONG, R ; TAHA, A ; BAUGH, D ; WINNIFORD, B.** *J. Mag. Reson,* 2007, vol. 187, 225
- **BUSICO, V. ; CARBONNIERE, P ; CIPULLO, R. ; PELLECCHIA, R. ; SEVERN, J ; TALARICO, G.** *Macromol. Rapid Commun.,* 2007, vol. 28, 1128
- **RESCONI, L ; CAVALLO, L ; FAIT, A ; PIEMONTESI, F.** *Chem. Rev.,* 2000, vol. 100, 1253